# EUROPEAN PATENT APPLICATION

(11) **EP 4 838 125 A1**
(43) Date of publication of application: **11.11.2026**
(21) Application number: 26177191.9
(22) Date of filing: 07.05.2026
(51) Int. Cl.: F16L 37/091

(54) **QUICK-COUPLING JOINT FOR AN IRRIGATION SYSTEM**

(30) Priority: 08.05.2025 IT 202500010335
(71) Applicant: Stiatti, Anna, 20145 Milano (IT); Stiatti, Alberto, 20145 Milano (IT); Stiatti, Matteo Maria, 21030 Duno (VA) (IT)
(72) Inventor: Stiatti, Anna, 20145 Milano (IT); Stiatti, Alberto, 20145 Milano (IT); Stiatti, Matteo Maria, 21030 Duno (VA) (IT)
(74) Representative: Branca, Emanuela

(57) **Abstract**

Quick-coupling joint (10) adapted to couple at least one end of a connection pipe of an irrigation system switching from an open to a closed configuration, comprising a hollow tubular body (20) comprising at least two through openings (21, 22), at least one through ring nut (30) mounted directly with an outer wall (24) of the hollow tubular body (20), a gripping device comprising a metal ring (50) comprising a passage port (55) adapted to switch from a smaller diameter to a larger diameter adapted to allow a passage of said at least one end of said connection pipe, wherein an inner wall (33) of said through ring nut (30) is adapted to switch from a configuration of less penetration within the hollow tubular body (20) maintaining the smaller diameter of the passage port (55) to a configuration of greater penetration within the hollow tubular body (20) enlarging the diameter of the passage port (55), wherein said hollow tubular body (20) comprises at least one flanged portion (25), an outer wall (34) of said through ring nut (30) comprises a through slot (35) for each of said at least one flanged portion (25) of the hollow tubular body (20) by constraining a roto-translation of said through ring nut (30) relative to said hollow tubular body (20).

## Description

The present invention relates to a quick-coupling joint for an irrigation system.

Quick-coupling joints for irrigation systems such as US 7021672 B2 are known in the prior art. Quick-coupling joints of the known prior art make it possible to quickly couple a pipe to an end of the joint by lifting a quick-coupling device mounted with the end of the joint.

Disadvantageously, quick-coupling joints of the known prior art have a pressure release and are difficult to handle by gardeners or farmers wearing gloves.

Disadvantageously, in case the joint is inadvertently pushed to decouple the other end of the joint from another connection pipe, the connection pipe coupled with the joint may then decouple from the joint, causing irrigation fluid leakage.

Disadvantageously, quick-coupling joints of the known prior art are complex in that they comprise a hollow tubular body, a shoulder-shaped ring that engages with the hollow tubular body, and a through ring nut that engages with the shoulder-shaped ring.

The object of the present invention is to make a more simplified, safer and easier-to-handle quick-coupling joint.

According to the invention, this object is achieved by a quick-coupling joint according to claim 1.

Other features are provided in the dependent claims.

The features and advantages of the present invention will become more apparent from the following exemplary and non-limiting description, with reference to the appended schematic drawings, wherein:
Figure 1 is a perspective view of a quick-coupling joint comprising a curved hollow tubular body according to the present invention in an open configuration making it possible to insert a connection pipe or to decouple the connection pipe;
Figure 2 is a section view according to the line II-II of Figure 1;
Figure 3 is a perspective view of the quick-coupling joint according to the present invention in a closed configuration;
Figure 4 is a section view according to the line IV-IV of Figure 3;
Figure 5 is a perspective view of a quick-coupling joint comprising a straight hollow tubular body according to the present invention in the closed configuration with said connection pipe;
Figure 6 shows a plan view from the top of Figure 5;
Figure 7 shows a side plan view of Figure 5;
Figure 8 is a section view according to the line VIII-VIII of Figure 7;
Figure 9 shows an enlarged view of a detail A from Figure 7;
Figure 10 shows a plan view from above of a metal ring comprising a plurality of elastic teeth;
Figure 11 shows a perspective view of a quick-coupling joint according to an alternative wherein two opposite through-openings of the joint comprise a through ring nut;
Figure 12 shows a perspective view of a quick-coupling joint according to another alternative wherein a hollow tubular body comprises three straight sections and three through openings provided with respective through ring nuts.

With reference to the above-mentioned figures, a quick-coupling joint 10 for an irrigation system is shown, wherein said quick-coupling joint 10 is adapted to quickly couple a connection pipe (not shown in the figures) of the irrigation system.

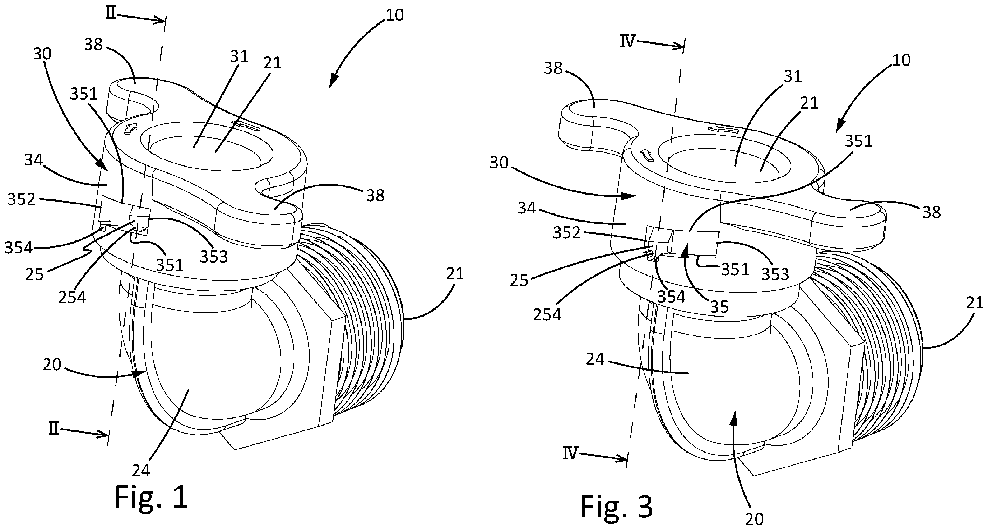

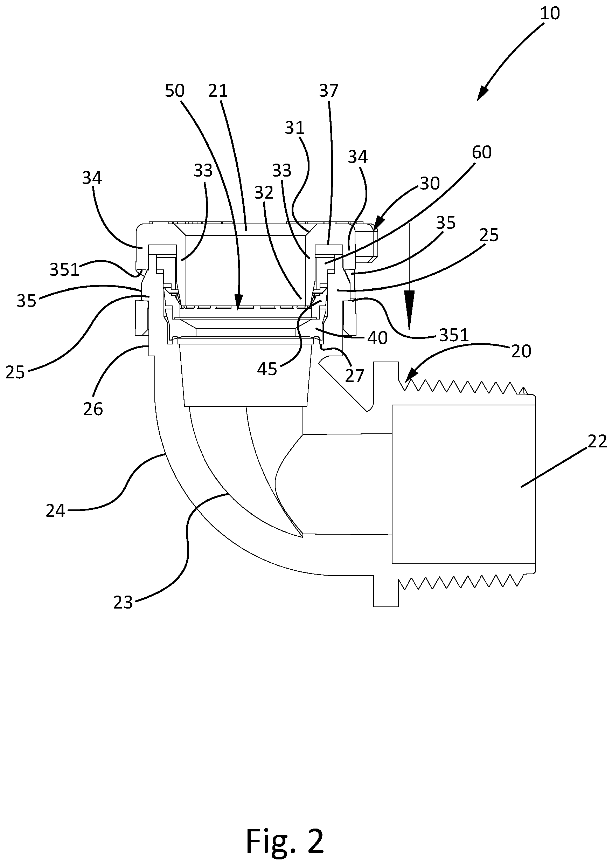

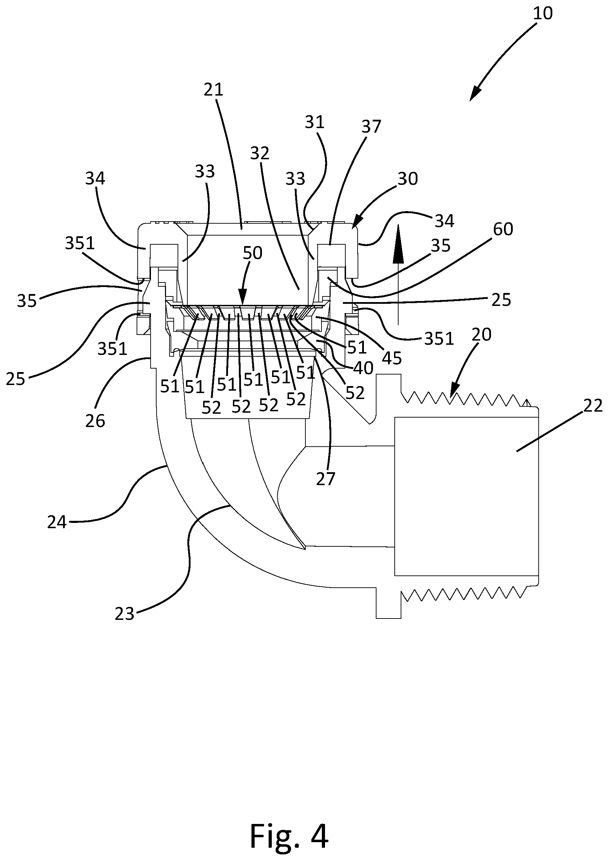

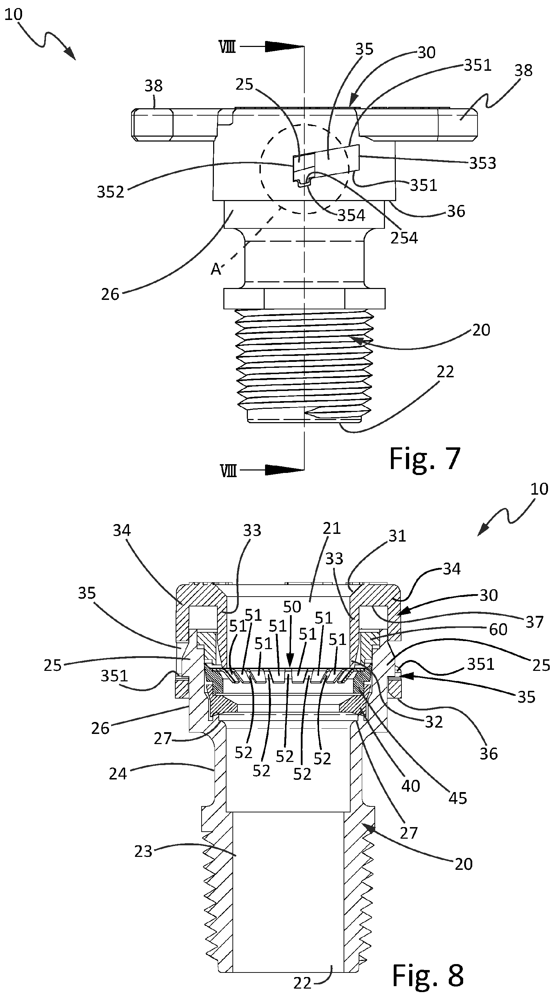

Said quick-coupling joint 10 is adapted to switch from an open configuration as shown in Figures 1 and 2 to a closed configuration as shown in Figures 3, 4, 5, 7, 8, 9, 11 and 12.

Said open configuration of the quick-coupling joint 10 makes it possible to insert or disconnect said connection pipe.

Said closed configuration of the quick-coupling joint 10 fixedly couples said connection pipe with said quick-coupling joint 10 when the connection pipe has previously been inserted into the quick-coupling joint 10, i.e. when the quick-coupling joint 10 was in the open configuration, or if the connection pipe is not inserted into the quick-coupling joint 10 prevents it from entering and connecting with the quick-coupling joint 10.

The quick-coupling joint 10 comprises a hollow tubular body 20 adapted to allow a passage of an irrigation system fluid.

The hollow tubular body 20 of the quick-coupling joint 10 comprises two through openings: a first through opening 21 and a second through opening 22 in fluid communication with each other.

At least one through opening 21 of said two through openings 21, 22 is adapted to allow inserting at least one end of said connection pipe, where, in Figures 1-9, said at least one through opening 21 is the first through opening 21.

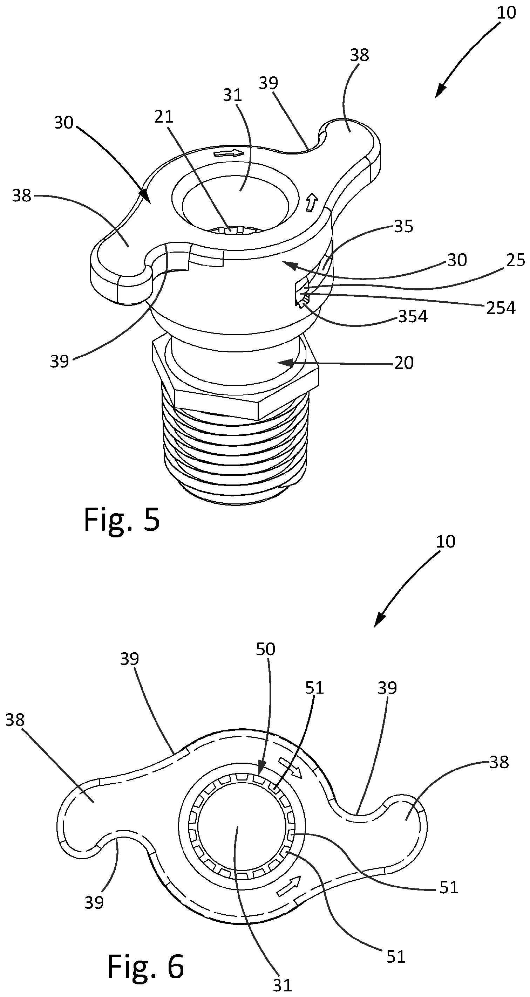

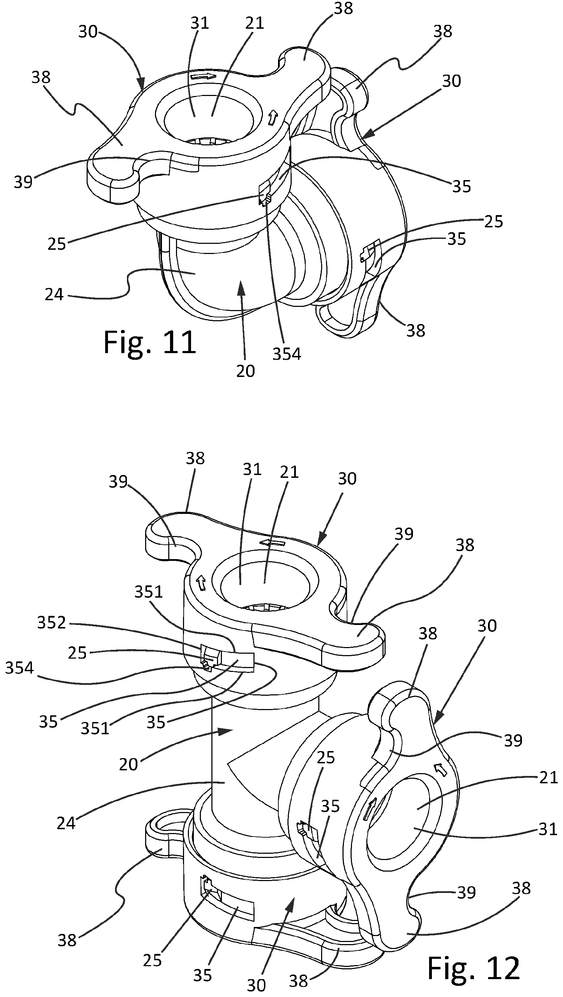

The hollow tubular body 20 may be a straight pipe as shown in Figures 5, 7 and 8 or a curvilinear pipe as shown in Figures 1-4, 11, or a combination of straight sections as shown in Figure 12 or a combination of curved sections.

As shown in particular in Figures 2, 4, 8, the hollow tubular body 20 comprises an inner wall 23 and an outer wall 24.

As shown in particular in Figures 1-5, 7-9 the hollow tubular body 20 preferably comprises two flanged portions 25.

Each flanged portion 25 protrudes from the outer wall 24 of the hollow tubular body 20 in a radial direction outward of the hollow tubular body 20.

Preferably the flanged portion 25 extends along an outer circumference of the outer wall 24 of the hollow tubular body 20 for a portion between 2% and 10% of the outer circumference, preferably between 3% and 4% of the outer circumference.

The hollow tubular body 10 comprises a first extreme portion 26 comprising said first through opening 21.

Preferably each flanged portion 25 protrudes from the outer wall 24 of the first extreme portion 26 of the hollow tubular body 10, so that the flanged portion 25 is arranged at a close distance from the first through opening 21.

Preferably, the two flanged portions 25 are diametrically opposite, which means that the two flanged portions 25 are arranged at 180 sexagesimal degrees from each other, i.e. they are diametrically opposite relative to a geometric centre of a geometric circumference that traces the first through opening 21.

The quick-coupling joint 10 comprises a through ring nut 30.

As shown in particular in Figures 2, 4, 8 said through ring nut 30 comprises a first through opening 31 and a second through opening 32 in fluid communication with said first through opening 21 with which said through ring nut 30 is mounted, an inner wall 33 and an outer wall 34.

Said through ring nut 30 is mounted with at least one of the two through openings 21, 22 of said hollow tubular body 20, which means that the through ring nut 30 is mounted in front of at least one of the two through openings 21, 22 of the hollow tubular body 20, where in Figures 1-9 is the first through opening 21. In Figures 11 and 12 the through ring nut 30 is also mounted with the second through opening 22 and in Figure 12 the through ring nut 30 is also mounted with a third through opening 23.

The through openings 31 and 32 of the through ring nut 30 are adapted to allow an insertion of said at least one end of said connection pipe.

Preferably said through ring nut 30 is mounted astride of said first extreme portion 26 of said hollow tubular body 20 as shown in Figures 1-9.

The mounting of the through ring nut 30 astride of the first extreme portion 26 of said hollow tubular body 20 means that the inner wall 33 of said through ring nut 30 protrudes into the hollow tubular body 20 through said first through opening 21, and that the outer wall 34 of said through ring nut 30 protrudes out of the hollow tubular body 20 and preferably covers at least a portion of said first extreme portion 26 of the hollow tubular body 20.

Between the inner wall 33 and the outer wall 34 of the through ring nut 30 a circular space 37 is provided which is arranged above the edge of the first through opening 21, i.e. preferably above the edge of the first extreme portion 26, but even more preferably not in contact with the edge.

The outer wall 34 of said through ring nut 30 comprises a through slot 35 for each flanged portion 25 of the hollow tubular body 20.

As shown in Figures 1-5, 7-9, each flanged portion 25 is arranged within a respective through slot 35, so that each flanged portion 25 passes through the respective through slot 35 and thus the roto-translational movement of the through ring nut 30 relative to said hollow tubular body 20 is constrained by said flanged portion 25 constrained within the respective through slot 35.

The mounting of said through ring nut 30 with said hollow tubular body 20 provides that said through ring nut 30 is rotatably and slidably mounted with said hollow tubular body 20.

Each flanged portion 25 arranged within the respective through slot 35 constrains a rotational and sliding movement of the through ring nut 30 relative to the hollow tubular body 20.

As shown in particular in Figures 1, 3, 5, 7, 9, each through slot 35 is oblique so that the through ring nut 30 rotating about said hollow tubular body 20 can slide in a vertical direction relative to the hollow tubular body 20.

Oblique means that the through slot 35 follows a helical profile for a portion, but for the short section it appears as oblique in the figures.

Each through slot 35 extends along the circumference of the outer wall 34 of the through ring nut 30 by a percentage between 5 and 10% of the outer circumference so that the through ring nut 30 can rotate by an angle of between 18 and 36 sexagesimal degrees, preferably 30 sexagesimal degrees, about a rotation axis passing through the centre of the through openings 21 and 31.

Each through slot 35 comprises two guide walls 351 arranged obliquely, i.e. following a helical portion for a section, and two extreme stop walls arranged at the ends of said two guide walls 351: a first extreme stop wall 352 and a second extreme stop wall 353.

The fact that the guide walls 351 follow a helical portion for a section implies that the first extreme stop wall 352 is arranged at a lower level than said second extreme stop wall 353, where the level is measured on the outer wall 34 of the through ring nut 30 and the level is measured from a lower base 36 of the through ring nut 30.

When the through ring nut 30 rotates constrained by said flanged portion 25 arranged within the respective through slot 35, it is provided that in a first rotation direction, the inner wall 33 of said through ring nut 30 penetrates more into the hollow tubular body 20 through said first through opening 21, causing said through ring nut 30 to slide towards said hollow tubular body 20 until said flanged portion 25 abuts against said first extreme stop wall 352, which is named as a configuration of greater penetration of the inner wall 33 of said through ring nut 30; whereas it is provided that in a second rotation direction, said inner wall 33 of said through ring nut 30 protrudes more from the inside of said hollow tubular body 20 by making said through ring nut slide away from said hollow tubular body 20 until said flanged portion 25 contacts said second extreme stop wall 353, which is named as a configuration of less penetration of said inner wall 33 of said through ring nut 30.

Even more preferably, near the first extreme stop wall 352, it is provided that one of the two oblique guide walls 351 comprises a stop groove 354 adapted to lock the flanged protuberance 25 within the through slot 35.

More generally, it is provided that each through slot 35 comprises a stop groove 354, wherein said closed configuration of the quick-coupling guide 10 provides that said flanged protuberance 25 is fitted into said stop groove 354 which is adapted to lock said at least one flanged protuberance 25 in position.

Even more preferably, it is provided that the lower guide wall 351 comprises said stop groove 354.

Alternatively, the stop groove 354 can be provided on the upper guide wall 351 of the through slot 35.

Even more preferably, it is provided that said flanged portion 25 comprises a stop protuberance 254 arranged in the direction and towards the stop groove 354 so that said stop protuberance 254 allows for a more secure hold in order to lock said flanged portion 35 in position with the stop groove 354.

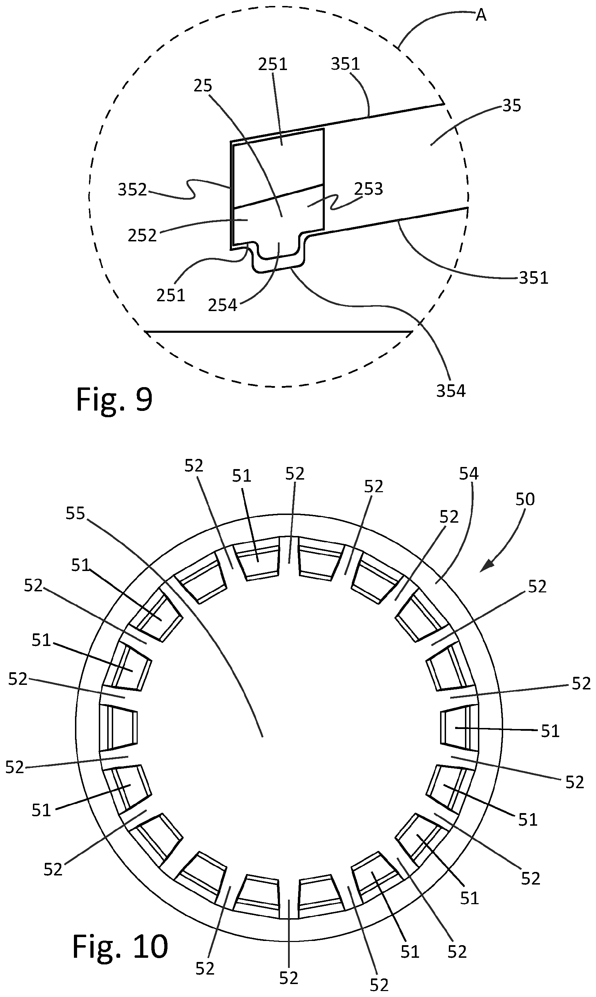

Even more preferably, as shown in particular in Figure 9, said flanged protuberance 25 comprises two oblique walls 251, an upper oblique wall and a lower oblique wall.

Even more preferably, the lower oblique wall 251 comprises said stop protuberance 254 as shown in particular in Figure 9.

Advantageously, the flanged protrusion 25 extends by a shorter length than the extension of the through slot 35 so as to allow the through ring nut 30 to rotate.

Even more preferably, as shown in particular in Figure 9 said flanged protuberance 25 comprises a first side wall 252 parallel to said first extreme stop wall 352 and wherein said first side wall 252 is adapted to abut against said first extreme stop wall 352. Further, said flanged protuberance 25 comprises a second side wall 253 parallel to said second extreme stop wall 353 and wherein said second side wall 253 is adapted to abut against said second extreme stop wall 353.

As shown in particular in Figures 1, 3, 5, 6, 7, preferably said through ring nut 30 comprises two outer radial protuberances 38 protruding in a radial direction outward of the through ring nut 30 and are handy, making it possible to turn the through ring nut 30 more easily.

Preferably said two outer radial protuberances 38 are arranged diametrically opposite to each other.

Preferably said two outer radial protuberances 38 comprise a curvilinear portion 39 adapted to be engaged by human fingers, so that the through ring nut 30 can be rotated even more easily using two fingers and a twist of a user's hand. Advantageously, the two outer radial protuberances 38 allow even a user wearing gloves to turn said through ring nut 30 easily and safely.

As shown in particular in Figures 2, 4, 8 the inner wall 23 of the first extreme portion 26 of said hollow tubular body 20 comprises a step 27 which increases the diameter of the inner cavity of the hollow tubular body 20. Said step 27 comprises an upper wall directed towards the first through opening 21.

The quick-coupling joint 10 comprises a first annular seal 40.

Said first annular seal 40 is mounted above said upper wall of step 27.

Said step 27 fixedly mounts said first annular seal 40 against said inner wall 23 of the hollow tubular body 20.

As shown in particular in Figures 2, 4, 8 and 10, the quick-coupling joint 10 comprises a metal ring 50 comprising an annular wall 54 which is mounted above an upper portion of said first annular seal 40.

As shown in particular in Figures 2, 4, 8 and 10, said metal ring 50 comprises a plurality of teeth 51 branching off said annular wall 54.

Each tooth 51 of said plurality of teeth 51 is spaced from a subsequent tooth 51 by a space 52.

Each tooth 51 of said plurality of teeth 51 protrudes inwards of the metal ring 50 in a radial direction and protrudes by leaning downwards, where downwards refers to the direction opposite to the first through opening 21.

Each of the said teeth 51 is elastic and is adapted to switch from a lower elastic compression configuration to a higher elastic compression configuration.

The lower elastic compression configuration corresponds to the closed configuration of the quick-coupling joint 10.

The higher elastic compression configuration corresponds to the open configuration of the quick-coupling joint 10.

The quick-coupling joint 10 comprises a second annular seal 60.

The metal ring 50 is mounted between the first annular seal and said second annular seal 60.

Said second annular seal 60 is mounted between the inner wall 23 of the hollow tubular body 20 and said inner wall 33 of the through ring nut 30.

This all means that said metal ring 50 comprises an annular wall 54 fixedly mounted, between said first seal 40 and said second seal 60, with the inner wall 23 of the hollow tubular body 20, so that the annular wall 54 is stationary and fixed relative to the inner wall 23 of the hollow tubular body 20.

When the connection pipe enters from the through opening 31 of the through ring nut 30 and thus enters from the through opening 21 of the hollow tubular body 20, the connection pipe abuts against said plurality of teeth 51 of said metal ring 50 when the quick-coupling joint is in the closed configuration.

When the quick-coupling joint 10 is in the open configuration, however, said at least one end of the connection pipe passes through said metal ring 50.

When the through ring nut 30 is rotated, then said plurality of teeth 51 switch from said lower compression configuration to a first higher compression configuration against the outer walls of the connection pipe, quickly locking the connection pipe with the quick-coupling joint 10, which then switches from an open configuration with the connection pipe to a closed configuration with the connection pipe.

As shown in Figures 3, 4, 5, 7-9, the closed configuration of the quick-coupling joint 10 with the connection pipe corresponds to the first higher compression configuration of the plurality of teeth 51 of the metal ring 50 against the outer walls of the connection pipe.

Said closed configuration of the quick-coupling joint 10 corresponds to said configuration of less penetration of the inner wall 33 of said through ring nut 30.

The configuration of greater penetration of the inner wall 33 of said through ring nut 30 provides that lower ends of said inner wall 33 abut with said plurality of teeth 51 of the metal ring 50 by switching said plurality of teeth 51 into a second greater compression configuration. The second greater compression configuration of said plurality of teeth 51 provides that said inner wall 33 of the through ring nut 30 pushes said plurality of teeth 51 from the inside outwards, moving them away from the connection pipe so that the diameter of an inner port of the metal ring 50 widens to allow the passage of the connection pipe, and bringing the plurality of teeth 51 closer to the inner wall 23 of the hollow tubular body 20.

As shown in Figures 1, 2, the open configuration of the quick-coupling joint 10 with the connection pipe provides that said inner wall 33 of the through ring nut 30 is in a configuration of greater penetration so as to push the teeth 51 away from the connection pipe towards the inner wall of the hollow tubular body 20 and thus allowing said at least one end of the connection pipe to be disconnected from the quick-coupling joint 10.

More generally, said quick-coupling joint 10 comprises a gripping device which comprises said metal ring 50 comprising a passage port 55 adapted to switch from a smaller diameter to a larger diameter adapted to allow for a passage of at least one end of said connection pipe.

The gripping device is adapted to switch from a closed configuration, wherein said metal ring 50 provides that the passage port 55 has a smaller diameter, to an open configuration, wherein said metal ring 50 has said passage port with a diameter that is larger and adapted to allow inserting and disconnecting said at least one end of the connection pipe.

It should be pointed out that the closed configuration of the gripping device provides that the smaller passage port of the metal ring 50 does not allow said at least one end of the connection pipe to be inserted through the first through opening 21 of the hollow tubular body 20.

Furthermore, it should be pointed out that if the end of the connection pipe is inserted through the first through opening 21 of the hollow tubular body 20 when the gripping device is in an open configuration, then the closed configuration of the gripping device provides that the metal ring 50 has a smaller passage port and therefore the gripping device holds said end of the connection pipe fixedly and safely.

Said closed configuration of said gripping device corresponds to the closed configuration of the quick-coupling joint 10 and corresponds to said configuration of less penetration of the inner wall 33 of said through ring nut 30.

Said open configuration of said gripping device corresponds to the open configuration of the quick-coupling joint 10 and corresponds to said configuration of greater penetration of the inner wall 33 of said through ring nut 30, so that said inner wall 33 enlarges the passage port of the metal ring 50.

Advantageously, said through ring nut 30 is mounted directly with said outer wall 24 of the hollow tubular body comprising at least one of said at least two through openings 21, 22 of the hollow tubular body 20 with which said the ring nut 30 is mounted.

Advantageously, said at least one flanged portion 25 of the hollow tubular body constrained within the respective through slot 35 of the through ring nut 30 allows the through ring nut 30 to be directly mounted with the tubular body 20 reducing the material used and reducing the complexity of the through ring nut 30 if compared to the known prior art which requires an additional fixed ring which is not present in this solution, making the quick-coupling joint 10 of the present technical solution simpler and easier to produce.

Preferably as shown in the figures, the outer wall 34 of the through ring nut 30 comprises two diametrically opposite through slots 35 that engage therein the two respective diametrically opposite flanged portions 25.

Preferably seen from above, a counter-clockwise rotation of the through ring nut 30 allows to switch the quick-coupling joint into the open configuration. Seen from above, a clockwise rotation of the through ring nut 30 allows to switch the quick-coupling joint into the closed configuration. Advantageously according to this preferable solution, the coupling of the quick-coupling joint 10 with the connection pipe occurs by rotating in the direction opposite to how a screw is screwed. This solution is particularly advantageous because it prevents an inexperienced user from inadvertently unscrewing a second connection pipe connected, by means of screwing, with the second through opening 22 of the hollow tubular body 20.

Even more preferably, a third seal 45 is provided between the first seal 40 and the metal ring 50 as shown in particular in Figures 2, 4, 8.

Alternatively, said first seal 40 and said third seal 45 are made in a single piece and thus the first seal 40 supports and mounts the metal ring 50 keeping it fixed relative to the inner wall 23 of the hollow tubular body 20.

Advantageously, said quick-coupling joint 10 according to this technical solution is safer and easier to handle, easier and simpler to produce.

Alternatively, it is possible to provide that the hollow tubular body 20 comprises a single flanged portion 25 and a respective single through slot 35 of the through ring nut 30.

Alternatively, it is possible to provide that the hollow tubular body 20 comprises a plurality of flanged portions 25 and a respective plurality of through slots 35 of the through ring nut 30.

Alternatively, said hollow tubular body 20 comprises at least one pair of said at least one flanged portion 25, arranged in diametrically opposite pairs, and the through ring nut 30 comprises at least one pair of said through slots 35 arranged in diametrically opposite pairs.

Alternatively, the teeth 51 of the metal ring 50 are made of shape memory material.

Alternatively, and more generally, it may be provided that the quick-coupling joint 10 comprises at least one through ring nut 30 mounted with at least one of the through openings 21, 22 of the hollow tubular body 20.

Alternatively, the hollow tubular body 20 may provide that both through openings 21, 22 can be provided with through ring nuts 30 as shown in Figure 11.

Alternatively, the hollow tubular body 20 may comprise several straight sections as shown in Figure 12 and may comprise several through openings, for example three through openings as shown in the figure, which may be provided with respective three through ring nuts 30.

Alternatively and more generally, at least one through opening 21, 22 of the hollow tubular body 20 is provided with a through ring nut 30, i.e. the hollow tubular body 20 is adapted to allow a fluid of the irrigation system to pass from at least one first through opening 21 to at least one second through opening 22.

The invention thus conceived is susceptible to several modifications and variations falling within the exclusive scope of the claims. In practice, the materials used, as well as their dimensions, can be of any type according to the technical requirements.

## Claims

1. Quick-coupling joint (10) for an irrigation system, wherein said quick-coupling joint (10) is adapted to couple at least one end of an irrigation system connection pipe,
wherein said quick-coupling joint (10) is adapted to switch from an open configuration adapted to allow inserting or disconnecting said at least one end of said connection pipe to a closed configuration adapted to fixedly couple said at least one end of said connection pipe with said quick-coupling joint (10),
wherein said quick-coupling joint (10) comprises a hollow tubular body (20) comprising at least two through openings (21, 22) in fluid communication, wherein at least one through opening (21) of said two through openings (21, 22) is adapted to allow inserting said at least one end of said connection pipe,
wherein said hollow tubular body (20) comprises an inner wall (23) and an outer wall (24),
wherein said quick-coupling joint (10) comprises at least one through ring nut (30),
wherein said through ring nut (30) comprises two through openings (31, 32) in fluid communication with said at least one through opening (21, 22) with which said through ring nut (30) is mounted, an inner wall (33) and an outer wall (34),
wherein said two through openings (31, 32) of said through ring nut (30) are adapted to allow inserting said at least one end of said connection pipe,
wherein said inner wall (33) of said through ring nut (30) protrudes into the hollow tubular body (20) through said at least one through opening (21, 22) with which said through ring nut (30) is mounted,
wherein said outer wall (34) of said through ring nut (30) protrudes out of the hollow tubular body (20),
wherein said quick-coupling joint (10) comprises a gripping device comprising a metal ring (50) comprising a passage port (55) adapted to switch from a smaller diameter to a larger diameter adapted to allow a passage of said at least one end of said connection pipe,
wherein said inner wall (33) of said through ring nut (30) is adapted to switch from a configuration of less penetration within the hollow tubular body (20) to a configuration of greater penetration within the hollow tubular body (20),
**characterised in**
**that** said hollow tubular body (20) comprises at least one flanged portion (25) which protrudes from the outer wall (24) of the hollow tubular body (20) in a radial direction outward of the hollow tubular body (20),
**that** said through ring nut (30) is mounted directly with said outer wall (24) of the hollow tubular body comprising at least one of said at least two through openings (21, 22) of the hollow tubular body (20),
**that** said outer wall (34) of said through ring nut (30) comprises a through slot (35) for each of said at least one flanged portion (25) of the hollow tubular body (20),
**that** each of said at least one flanged portion (25) of said hollow tubular body (20) passes through a respective one of said through slot (35) constraining a roto-translation of said through ring nut (30) relative to said hollow tubular body (20),
**that** said configuration of less penetration of said inner wall (33) of said through ring nut (30) within the hollow tubular body (20) maintains said passage port (55) of the metal ring (30) having a smaller diameter,
**that** said configuration of greater penetration of said inner wall (33) of said through ring nut (30) within the hollow tubular body (20) enlarges said passage port (55) up to the larger diameter,
wherein said open configuration of said quick-coupling joint (10) corresponds to said configuration of greater penetration of said inner wall (33) of said through ring nut (30) within the hollow tubular body (20),
wherein said closed configuration of said quick-coupling joint (10) corresponds to said configuration of less penetration of said inner wall (33) of said through ring nut (30) within the hollow tubular body (20).

2. Quick-coupling joint (10) according to claim 1, **characterised in that** said hollow tubular body (20) comprises at least one pair of said at least one flanged portion (25), which are arranged in diametrically opposite pairs.

3. Quick-coupling joint (10) according to any one or more of claims 1 or 2, **characterised in that** said through ring nut (30) is mounted astride of said outer wall (24) of said hollow tubular body (20),
wherein said outer wall (34) of said through ring nut (30) protrudes out of said hollow tubular body (20) and covers at least a portion of said outer wall (24) of the hollow tubular body (20),
wherein said outer wall (24) comprises said at least one through opening (21, 22) with which said through ring nut (30) is mounted.

4. Quick-coupling joint (10) according to any one or more of claims 1-3, **characterised in that** said through ring nut (30) comprises two outer radial protuberances (38) which protrude in a radial direction outward of the through ring nut (30) and are handy.

5. Quick-coupling joint (10) according to any one or more of claims 1-4, **characterised in that** said metal ring (50) comprises an annular wall (54) and a plurality of teeth (51) branching off said annular wall (54), wherein each tooth (51) of said plurality of teeth (51) protrudes inwards of the metal ring (50) in a radial direction and protrudes by leaning downwards, wherein leaning downwards means in the direction opposite to said at least one through opening (21, 22) with which said through ring nut (20) is mounted,
wherein each of said teeth (51) is adapted to switch from a lower compression configuration corresponding to the closed configuration to a higher compression configuration corresponding to the open configuration of the quick-coupling guide (10).

6. Quick-coupling joint (10) according to any one or more of claims 1-5, **characterised in that**
each through slot (35) comprises two guide walls (351) arranged obliquely and two extreme stop walls arranged at the ends of said two guide walls (351), a first extreme stop wall (352) and a second extreme stop wall (353),
wherein said first extreme stop wall (352) is arranged at a lower level than said second extreme stop wall (353), wherein the level is measured on the outer wall (34) of the through ring nut (30) and the level is measured from a lower base (36) of the through ring nut (30).

7. Quick-coupling joint (10) according to any one or more of claims 1-6, **characterised in that** said quick-coupling joint (10) comprises a first seal (40) and a second seal (60),
wherein said metal ring (50) is fixedly mounted between said first seal (40) and said second seal (60) with the inner wall (23) of the hollow tubular body (20).

8. Quick-coupling joint (10) according to any one or more of claims 1-7, **characterised in that** said at least one flanged portion (25) extends along an outer circumference of said outer wall (24) of the hollow tubular body (20) for a portion between 2% and 10% of the outer circumference, preferably between 3% and 4% of the outer circumference.

9. Quick-coupling joint (10) according to any one or more of claims 1-8, **characterised in that** each through slot (35) extends along a circumference of said outer wall (34) of the through ring nut (30) for a percentage of the outer circumference between 5 and 10% of the outer circumference, so that the through ring nut (30) can rotate by an angle between 18 and 36 sexagesimal degrees, preferably 30 sexagesimal degrees.

10. Quick-coupling joint (10) according to any one or more of claims 1-9, **characterised in that** each through slot (35) comprises a stop groove (354), wherein said closed configuration of the quick-coupling guide (10) provides that said flanged protuberance (25) is fitted within said stop groove (354) which is adapted to lock said at least one flanged protuberance (25) in position.

11. Quick-coupling joint (10) according to claim 10, **characterised in that** said at least one flanged portion (25) comprises a stop protuberance (254) arranged in the direction and towards the stop groove (354) of the through slot (30).
